## Europäisches Patentamt
## European Patent Office
## Office européen des brevets

(11) Numéro de publication: **0 143 061**
**B1**

(12) # FASCICULE DE BREVET EUROPÉEN

(45) Date de publication du fascicule du brevet:
13.01.88

(51) Int. Cl.⁴: **B 64 C 11/34, F 03 D 7/02**

(21) Numéro de dépôt: **84420174.9**

(22) Date de dépôt: **17.10.84**

(54) Dispositif de régulation automatique du pas d'une hélice.

(30) Priorité: **23.11.83 FR 8319360**

(43) Date de publication de la demande:
**29.05.85 Bulletin 85/22**

(45) Mention de la délivrance du brevet:
**13.01.88 Bulletin 88/2**

(84) Etats contractants désignés:
**AT BE CH DE FR GB IT LI NL SE**

(56) Documents cité:
**DE-C-238 066**
**GB-A-8 600**
**GB-A-258 952**
**US-A-1 851 874**

(73) Titulaire: **Joulia, Pierre, 5, allée du Déjeuner sur l'Herbe La Pérollière, F-74000 Cran- Gevrier (FR)**

(72) Inventeur: **Joulia, Pierre, 5, allée du Déjeuner sur l'Herbe La Pérollière, F-74000 Cran- Gevrier (FR)**

(74) Mandataire: **Hagry, François, 52, avenue de la Gare, F-74100 Annemasse (FR)**

LIBER, STOCKHOLM 1988

## Description

La présente invention est relative aux hélices dont le pas doit être adapté aux conditions momentenées de fonctionnement, notamment mais non exclusivement, à celles utlisées en aviation ou dans des éoliennes.

Le problème de la régulation de la force de propulsion d'une hélice animée par un moteur, par exemple en aviation, en fonction des différents régimes de ce moteur dans les phases classiques de fonctionnement, ou celui de le régulation de la vitesse de rotation d'une hélice d'éolienne en fonction de la force du vent, ne sont pas nouveaux et de nombreux dispositifs d'adaptation automatique du pas de l'hélice, y compris pour les éoliennes jusqu'à la mise en drapeau des pales, ont été proposés. Ils font en général appel à des timoneries compliquées donc chères et sources d'incidents de fonctionnement trop fréquents et sources de danger.

Ainsi, sont connues des éoliennes dans lesquelles les pales peuvent se déplacer axialement par rapport à l'arbre moteur et sous l'action du vent, mais à l'encontre d'organes élestiques. Ce mouvement axial est transformé en rotation autour de l'axe des pales pour en varier le pas par des intermédiaires mécaniques assez complexes. La transformation est obtenue, par exemple dans le brevet US-A-2 547 636, par des bras solidaires des pieds de pale et coopérant avec des tringles, dans le brevet US-A-2 666 149 par des câbles enroulés autour des pieds de pales, dans le brevet US-A-2 629 450 par un système à pignons et crémaillères, dans le brevet DE-C-805 388 par la mise en action d'une tringle sollicitée par un ressort. Dans le brevet US-A-2 319 592, un bras solidaire du pied de pale présente des trous oblongs coopérant avec des doigts.

Beaucoup plus récemment, dans la demande de brevet FR-A-2 422 835, a été décrit un dispositif de régulation automatique de la vitesse d'une éolienne par modification du pas à l'encontre de l'action d'un organe élastique. Chaque pale est montée coulissante axialement par rapport à l'arbre moteur contre l'organe élastique et le mouvement de translation est transformé en pivotement par l'intermédiaire d'un bras dont une extrémité est solidaire du pied de pale et dont l'autre présente un trou oblong dans lequel un doigt, monté coulissant, est fixé sur un organe solidaire en rotation de l'arbre moteur. La nécessité d'organes intermédiaires et moyens de guidage tels que patins à aiguilles, fait que le dispositif proposé reste malgré tout fort complexe donc délicat. On connait par ailleurs en aviation des dispositifs de régulation du pas d'hélices faisant appel à des systèmes vis-écrou ou équivalents et travaillant à l'encontre d'un organe élastique. Ainsi dans le document GB-A-8600 (A.D. 1914), qui correspond au présambu de le revendication 1, la force centrifuge agit sur chaque pale à l'encontre d'un ressort hélicoïdal on la déplaçant axialement par rapport à un logement. Ce déplacement induit une rotation de la pale autour de son axe par une vis portée par le pied de la pale et coopérant avec un écrou solidaire de l'arbre du rotor.

Le dispositif décrit dans le brevet DE-C-238086, bien que construction très différente, présente beaucoup d'analogies avec le précédent.

Dans le brevet GB-A-258 952 qui concerne la régulation du pas d'une pale éolienne, le système vis-écrou est remplacé par un doigt de came se déplacant dans une lumière piofilée pour faire varier l'incidence sous l'action de la force centrifuge à l'encontre d'un premier ressort qui se comprime jusqu'à ce qu'une butée vienne contre un arrêt solidaire de la pale. Si la vitesse augmente encore, la butée se déplacera avec la pale en comprimant un second ressort pour permettre un changement ultérieur du pas de la pale.

Les dispositifs qui viennent d'être évoqués sont très complexes, assez peu fiables, ce qui a conduit à leur abandon définitif depuis plus d'un demi-siècle.

La présente invention vise à s'affranchir d'une telle complexité et de telles limitations, en proposant un dispositif de régulation automatique du pas d'une hélice, simplifié et pouvant être mise en oeuvre tant pour la propulsion, comme en aviation, que pour la transformation de l'énergie d'un fluide en écoulement comme dans le cas d'une éolienne, ou dans des domaines d'applications moins classiques comme, par exemple, l'aéromodélisme, les aéroglisseurs, les ventilateurs industriels, les pompes verticales à hélices à variation de débit, les impulseurs de pompes, etc.. Dans ce but l'invention propose une solution catactérisé comme dans le seconde partie de le revendication 1.

Les caractéristiques reprises dans les revendications, avantages et autres aspects de l'invention, apparaîtront dans la description qui suit et pour l'intelligence de laquelle on se référera aux dessins dont:

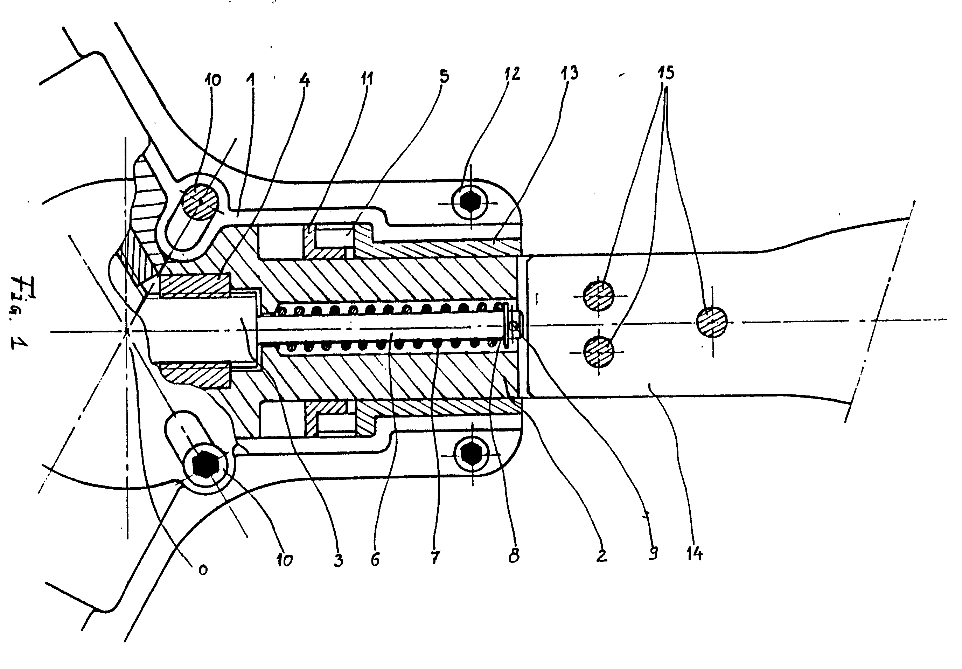

- la figure 1 représente en coupe partielle par un plan normal à l'arbre moteur et passant par l'axe d'une pale d'hélice, un mode d'exécution de l'invention,

- et la figure 2 illustre un autre mode d'exécution par une vue en coupe partielle par un plan passant par l'axe de l'arbre moteur et l'axe d'une pale d'hélice.

Bien que cette utilisation ne soit pas exclusive, l'invention va être exposée en faisant plus particulièrement référence à un rotor pour l'aviation avantageusement utilisable dans le domaine des ultra-légers motorisés et moto-planeurs.

Le rotor, partiellement représenté à la figure unique, est du type tripale, ce qui n'est pas déterminant pour l'invention, celle-ci pouvant être mise en oeuvre sans difficulté particulière avec un nombre quelconque de pales, notamment deux.

Un boîtier de carter 1, constitué de deux demi-

coquilles ou davantage ou encore monobloc, est rendu solidaire d'une arbre moteur référencé par son axe 0, par des boulons 10. Il peut être exécuté en alliage léger ou en matériau plastique injecté. Les demi-coquilles sont assemblées au moyen de boulons 12. Dans le boîtier 1 et coaxialement à chaque pale 14 est immobilisé, de façon connue, un manchon de guidage 13 en alliage léger ou matériau plastique approprié. Monté coulissant et libre en rotation, dans ce manchon de guidage 13 se trouve un pied de pale 2, lui-même également en alliage léger ou matériau plastique. Ce pied de pale 2 est solidarisé de la pale proprement dite 14, par exemple, comme représenté, au moyen de boulons 15, mais il pourrait tout aussi bien être collé ou riveté sur cette pale 14 qui est avantageusement réalisée en bois contrecollé et moulé. Il est également possible d'envisager une réalisation monobloc de la pale 14 et de son pied 2.

Du côté de l'axe 0 de l'arbre moteur et dans un logement ménagé dans le pied de pale 2, et rendu solidaire de celui-ci, se trouve un écrou 4 à pas rapide, pour les raisons exposées plus loin. Cet écrou 4 est en prise avec une vis 3 de même axe et immobilisée de façon connue dans le boîtier 1. Dans le cas présent d'un rotor tripale, le positionnement et l'immobilisation se font automatiquement du fait de la géométrie particulière. La vis 3 est prolongée axialement dans le pied de pale 2 par une tige 6 autour de laquelle s'enroule un ressort hélicoïdal de rappel 7, arrêté en bout de tige 6, par exemple au moyen d'une rondelle 8 et d'une goupille 9, ou de toute autre manière (écrou par exemple). L'autre extrémité du ressort 7 s'appuie sur un siège que présente le fond du pied de pale 2. Le ressort 7 a pour fonction de solliciter le pied de pale 2 en direction de l'arbre moteur 0, c'est-à-dire, comme on le verra plus loin, vers la position de la pale 14 en drapeau.

Coulissant autour du pied de pale 2 et dans le boîtier 1, est disposée une bague à épaulement 11 en alliage léger ou matériau plastique qui sert au centrage d'un organe élastique ou ressort 5 métallique ou en matériau plastique s'appuyant par son autre surface d'extrémité contre le manchon de guidage 13. La bague à épaulement 11 sert en outre de butée de fin de course lorsque, comme on le verra plus loin, le pied de pale 2 atteint son éloignement extrême de l'axe moteur 0 et que le ressort 5 atteint, lui, sa déformation maximale. Avantageusement, la butée 11 et l'organe élastique 5 seront de forme générale annulaire entourant le pied de pale 2.

On voit que, lorsque le moteur est au repos, le ressort hélicoïdal de rappel 7 maintient le pied de pale 2 dans sa position extrême du côté de l'axe du moteur 0. Le moteur étant mis en marche et son régime augmentant, la force centrifuge va avec une intensité croissante solliciter vers l'extérieur la pale 14 avec son pied 2 à l'encontre de la force de rappel du ressort 7. Cette sollicitation induit un déplacement axial centrifuge qui, par le système vis 3, écrou 4 à pas rapide, contraint la pale 14 et son pied 2 à tourner autour de leur axe, donc modifie le pas de la pale 14, ce, jusqu'à ce que le pied de pale 2 vienne en butée contre la bague à épaulement ou butée 11. A ce moment, la force antagoniste du ressort vient avec une intensité croissante s'opposer à ce déplacement de la butée 11, jusqu'à ce que le ressort 5 atteigne sa déformation maximale. Le déplacement de la butée 11, donc du pied de pale 2, est donc limité et contrôlé par l'organe élastique 5. Le moteur baissant de régime jusqu'à l'arrêt, le mouvement inverse se produit jusqu'au retour à la position extrême de repos.

Les pales 14 ayant leurs caractéristiques angulaires et aérodynamiques propres, il est intéressant de faire correspondre la position extrême dé repos à la position en drapeau de la pale 14, où la pale 14 est dans le lit du vent, ce qui correspond à un pas quasi-infini et où la traînée de l'hélice sera minimale. Le régime du moteur croissant, on passera progressivement de cette position vers des positions intermédiaires où le pas de l'hélice ira décroissant jusqu'à une position de pas optimal correspondant à la vitesse de croisière et à un rendement maximal de l' hélice, lorsque la bague 11 commencera à solliciter le ressort 5. Lorsqu' un régime supérieur est nécessaire pour le moteur, par exemple en montée, le ressort 5 s'écrasant jusqu'à sa déformation maximale, on passera ainsi à une position extrême de pas minimal, dite de "petit pas" pour les pales. Si on veut faire voler l'avion en planeur, il suffira d'arrêter le moteur, ce qui mettre automatiquement l'hélice en drapeau avec une trainée minimale.

De la description du mode de réalisation de l'invention qui précède, on voit, ce qui n'était pas possible jusqu'alors, que peuvent facilement être mises en oeuvre au moins deux fonctions: le pas variable automatique en fonction de la vitesse de rotation du moteur, ce qui donne un rendement optimal et la mise en drapeau automatique, moteur arrêté. Une troisième fonction est en outre possible: la mise au "petit pas" à régime maximal du moteur. Ces aspects rendent pariculièrement avantageuse l'utilisation de l'invention dans le domaine de l'avitaton légère et ultra-légère. Pour d'autres utilisations, par example dans le domaine nautique, on pourra ne rechercher, le cas échéant, qu'une seule fonction. Le fonctionnement automatique apporte sécurité et simplicité d'utilisation. La technologie très simple permet un prix de revient très bas, une quasi-absence de nécessité d'entretien, un montage et un démontage très rapide et un déréglage pratiquement impossible, chaque hélice étant préréglée en fonction du moteur et du réducteur que l'utilisateur possède déjà sur son avion.

Dans l'exemple décrit ci-dessus, l'écrou 4 est solidaire du pied de pale 2 et la vis 3 de l'arbre moteur. Il est clair que l'on peut, en restant dans le cadre de l'invention, avoir une vis solidaire du pied de pale 2 et un écrou 4 solidaire de l'arbre moteur 0 pour assurer les mêmes fonctions que précédemment.

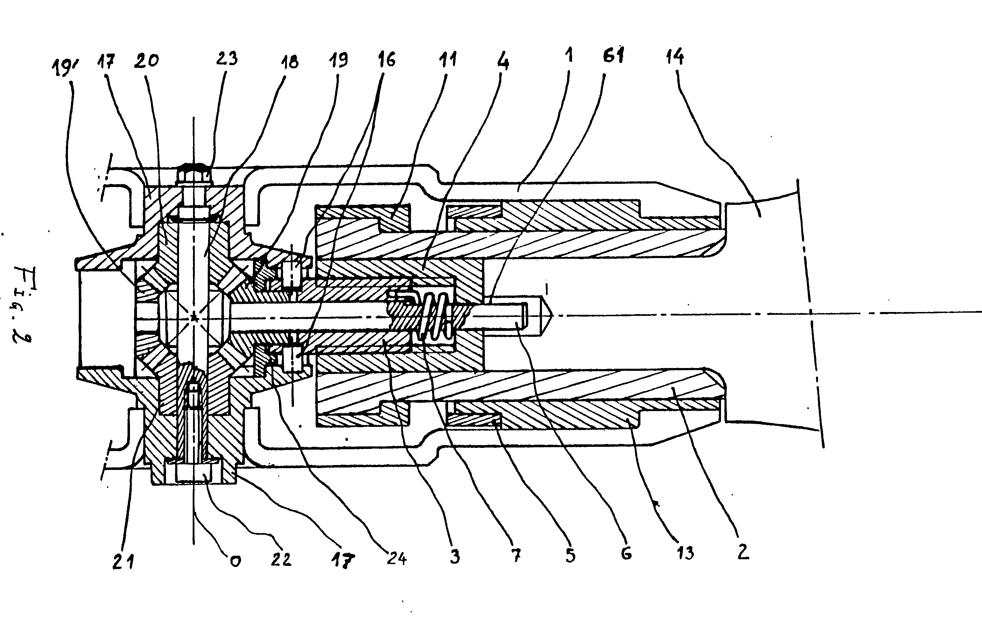

La figure 2 illustre un autre mode de réalisation de l'invention, dans lequel les organes identiques ou similaires aux précédents portent les mêmes références numériques. Dans ce mode d'exécution sont prévus une possibilité de réglage de positionnement et d'immobilisation de certains organes, l'appareil étant au sol, pour varier l'amplitude de la course de déplacement du pied de pale, de même qu'un dispositif de coordination ou synchronisation de la variation du pas des pales en fonctionnement.

Le pré-réglage au sol de la course de déplacement du pied de pale 2 entre sa position de mise en drapeau et sa position de grand pas est opéré au moyen de goupilles 16 solidaires de la vis 3 ou de formes adéquates venues avec la vis 3. Ces goupilles ou formes 16 viennent se loger en coopérant avec elles dans les lumières ou trous excentrés ménagés dans deux flasques 17 de réglage. Les deux flasques 17 sont rendus solidaires en rotation autour d'un arbre 18 et peuvent ainsi être manipulés en rotation autour de l'axe du rotor 0. Des marques peuvent repérer les positions respectives par rapport au boîtier 1. Cette manipulation permet de faire varier selon le sens de rotation autour de l'axe 0 l'emplacement de vis 3 par rapport à cet axe. Ces vis 3 servant de butées de fin de course aux écrous 4 solidaires des pieds de pale 2, la position de ces pieds de pale 2 par rapport à l'axe 0 peut ainsi être réglée dans la position de repos ou de mise en drapeau de la pale 14. On parvient ainsi à modifier la course hélicoïdale du pied de pale 2 jusqu'à la butée élastque, cette butée 5 déterminant la position de la pale 2 au grand pas ou pas optimal. L'incidence de la pale 14 aux grand et petit pas peut ainsi être modifiée par rotation des flasques 17. Pour opérer ce réglage, flasques 17 seront d'abord libérés par dévissage des vis 22 puis a en position par blocage de ces vis 22.

Le dispositif illustré à la figure 2 est également équipé d'un système de coordination ou synchronisation du mouvement des pales 14. En effet, bien que les constructions soient identiques pour chacune de pales 14, on peut toujours avoir une certaine dispersion dans les variations de pas des pales 14, ne serait-ce que du fait d'écarts à l'intérieur des tolérances et des caractériatiques mécaniques des organes élastiques concernés qui ne peuvent jamais être rigoureusement identiques.

Dans ce but, les mouvements des pieds 2 de pales 14 sont liés. Pour ce faire, la tige 6 est solidaire du côte de l'axe moteur 0 d'un pignon conique 19, et présente à son autre extrémité un plat 61 ou toute autre forme adéquate coopérant avec un forme femelle correspondante dans le fond de l'écrou 4. Ainsi, la rotation de l'écrou 4 avec celle du pied de pale 2 entraîne celle de la tige 6 et, par suite, du pignon conique 19, la translation axiale relative de la tige 6 et de l'écrou 4 restant libre. Le pignon 19 fait partie d'un train d'engrenages à pignons coniques 20, 21 coaxiaux à l'arbre moteur 0 et en prise avec les pignons coniques 19 des autres pieds de pale (non représentés). Les déplacements en rotation des divers pieds de pales 2 sont ainsi coordonnés et synchronisés par les pignons coniques intermédiaires 20, 21.

Le rappel automatique du pied 2 de pale 14 vers sa position de mise en drapeau se fait sans problème au moyen du ressort 7 coopérant avec la vis 3 ou la tige 6 et l'écrou 4. Il pourrait également se faire par un ressort rappelant directement les pignons coniques 19, 20, 21 dans leur position correspondant à la mise en drapeau. Le ressort peut dans ce dernier cas être monté sur l'arbre 18 porte pignons 20, 21, ce même arbre 18 étant celui autour duquel les flasques 17 peuvent être déplacés en rotation comme dit précédemment. Dans cette dernière hypothèse un ressort unique suffira à rappeler l'ensemble des pales 14 dans leur position de mise en drapeau ou des repos.

Ce qui vient d'être dit en référence à une utilisation dans le domaine de l'aviation peut être, sans modification significative, transposé à une éolienne où c'est l'action du vent sur l'hélice qui entraîne l'arbre moteur. Dans ce cas, l'hélice sera réglée pour avoir son pas le plus faible à l'arrêt, afin de bénéficier au mieux des vents très faibles en s'y opposant au mieux. La vitesse de rotation augmentant avec la force du vent, la force centrifuge à l'encontre du ressort hélicoïdal 7 va induire une augmentation d'incidence de l'hélice, ce qui aura pour effet de modérer et régulariser la vitesse de rotation. Pour un vent violent, le mouvement se prolongera jusqu'à la mise en drapeau de l'hélice, donc l'hélice présentant son profile dans le lit du vent, ce qui correspond au pas quasi-infini, limitant ainsi la vitesse de rotation de l'hélice et assurant donc la sécurité dès qu'un certain seuil sera atteint.

Il va de soi que d'autres applications de l'invention sont envisageables pour tout autre rotor à hélice, notamment dans les domaines nautinue et de la ventilation.

Ce peut être notamment le cas en aéromodélisme, dans les aéroglisseurs, les ventilateurs industriels, les pompes verticales à hélices à veristion de débit, les impulseurs de pompes, etc...

## Revendications

1. Dispositif de régulation automatique du pas d'une hélice de rotor dans lequel la force centrifuge agit sur chaque pale (14) à l'encontre de l'action prédéterminée d'au moins un organe élastique (7), pour déterminer l'incidence de celle pale (14), celle-ci pouvent se déplacer axialement dans un logement (13) de pied de pale (2) sous l'action de la force centrifuge et/ou de l'organe élastique (7), des moyens (3, 4) induisant à partir de ce déplacement axial, un déplecement en rotation de la pale (14) autour de son axe, ces moyens (3, 4) comprenant une vis (3) et un ecrou (4) en prise, coaxiaux à la pale (14), et dont l'un (3 ou 4) est solidaire du pied de la pale (2) et l'autre (4 ou 3) solidaire de l'arbre du rotor (0), le pied de pale (2) étant mobile axialement et en rotation dans un manchon (13) solidaire d'un boîtier (1) lié à l'arbre du rotor (0), l'organe élastique (7) étant un ressort hélicoïdal guidé par une tige (6) solidaire de la vis (3) et s'appuyant à une extrémité sur une pièce (8) solidaire de cette tige (6), et à l'autre extrémité sur une partie solidaire du pied de pale (2), le déplacement axial du pied de pale (2) étant limité par une butée (11), caractérisé par le fait que la butée (11) est mobile et qu'un second organe élastique (5) est interposé entre cette butée (11) et une pièce (13) solidaire du boîtier (1), ce qui permet un déplacement contrôlé et limité de cette butée (11), et que la butée (11) et le second organe élastique (5) sont de forme générale annulaire et entourent le pied de pale (2).

2. Dispositif selon la revendication 1, caractérisé par le fait qu'il comprend des moyens (16, 17, 22) pour régler au repos l'amplitude de la course de déplacement axial du pied de pale (2) entre sa position de drapeau et sa position de grand pas.

3. Dispositif selon la revendication 2, caractérisé par le fait que les moyens pour régler l'amplitude de la course de pied de pale comprennent des goupilles (16) ou autres formes solidaires de la vis (3), coopérant avec des lumières ou trous ménagés dans deux flasques (17) et pouvant être déplacés et immobilisés (22) en rotation autour d'un arbre (18) coaxial au rotor (0) par rapport au boîtier (1).

4. Dispositif selon l'une quelconque des revendications 1 à 3, caractérisé par le fait qu'il comporte des moyens (61, 19, 20, 21) pour coordonner et synchroniser le mouvement relatif de variation de pas des pales (2) entre elles.

5. Dispositif selon la revendication 4, caractérisé par le fait que ces moyens comprennent, correspondant a chaque pied (2) de pale (14), un pignon conique (19) solidaire de la tige (6) en prise avec des pignons coniques (20, 21) coaxiaux à l'arbre du rotor (0), ces derniers pignons (20, 21) étant également en prise avec les pignons coniques (19) des autres pieds (2) de pale (14).

6. Dispositif selon la revendication 5, caractérisé par le fait la tige (6) est solidaire (61) en rotation de l'écrou (4) et libre en translation par raport à celui-ci,

7. Dispositif selon la revendication 6, caractérisé par le fait que le ressort (7) rappelle le pied (2) de pale (14) vers la position de repos en coopérant avec la tige (6) ou la vis (3) qui en est solidaire et l'écrou (4).

8. Dispositif selon la revendication 6, caractérisé par le fait que les pieds (2) de pales (14) sont rappelés vers leur position de repos par un ressort coopérant avec l'arbre (18) porte pignons (20, 21) et ces pignons (20, 21).

9. Utilisation en aviation d'un rotor à hélice muni d'un dispositif selon l'une quelconque des revendications 1 à 8, caractérisée par le fait que les pales (14) de l'hélice et le dispositif de régulation sont conçus de façon à assurer automatiquement une position de mise en phase intermédiaire de pas décroissant jusqu'à un pas optimal quand le régime du moteur augmente jusqu'au régime de croisière et une phase à petit pas ou pas minimal à haut régime moteur.

10. Utilisation dans une éolienne d'un rotor à hélice muni d'un dispisitif selon l'une quelconque des revendications 1 à 8, caractérisée par le fait que les pales (14) de l'hélice et le dispositif sont conçus de façon à assurer automatiquement une phase de pas croissant et optimal pour des vitesses de vent croissantes, jusqu'à une position de mise en drapeau, soit de pas quasi-infini, pour une vitesse de vent atteignant ou dépassant un seuil de sécurité.

## Patentansprüche

1. Vorrichtung zur automatischen Verstellung des Propellerblattwinkels, bei der die Zentrifugalkraft gegen die vorgegebene Größe mindestens eines elastischen Organs (7) auf jedes Blatt (14) wirkt, um die Anstellung des Blattes (14) festzulegen, das sich axial in einer Führung (13) am Blattfuß (2) unter der Wirkung der Zentrifugalkraft und/oder des elastischen Organs (7) bewegen kann, mit Mitteln (3, 4) zur Erzeugung einer Rotationsverstellung des Blattes (14) um seine Achse in Abhängigkeit von der axialen Bewegung, die (3, 4) eine Schraube (3) und eine damit in Eingriff stehende Mutter (4) jeweils axial zu dem Blatt (14) umfassen, von denen das eine Teil (3 oder 4) an dem Blattfuß (2) und das andere Teil (4 oder 3) an der Rotorwelle (0) befestigt ist, wobei der Blattfuß (2) axial und rotatorisch in einer an einem der Rotorwelle (0) zugeordneten Gehäuse (1) befestigten Hülse (13) beweglich ist und das elastische Organ (7) eine mit Hilfe eines Stiftes (6) geführte Schraubenfeder ist, der an der Schraube (3) befestigt ist, und die sich an der einen Seite auf einem mit dem Stift (6) verbundenen Teil (8) und an der anderen Seite auf einem mit dem Blattfuß (2) verbundenen Abschnitt abstützt, und wobei die axiale Bewegung des Blattesfußes (2) durch einen Anschlag (11) begrenzt ist, dadurch gekennzeichnet, daß der Anschlag (11) beweglich ist, und daß ein zweites elastisches Organ (5) zwischen dem Anschlag (11) und einem mit dem Gehäuse (1) verbundenen Teil (13) angeordnet ist, was eine kontrollierte und begrenzte Verstellung des Anschlages (11) gestattet, und daß der Anschlag (11) und das zweite elastische Organ (5) im wesentlichen eine Ringform aufweisen und den Blattfuß (2) umgeben.

2. Vorrichtung nach Anspruch 1, dadurch gekennzeichnet, daß sie Mittel (16, 17, 22) zur Einstellung der Größe der axialen Hubbewegung des Blattfußes (2) im Stand zwischen seiner Segelstellung und seiner Stellung mit großem Anstellwinkel umfaßt.

3. Vorrichtung nach Anspruch 2, dadurch gekennzeichnet, daß die Mittel zur Einstellung der Größe des Hubes des Blattfußes Stifte (16) oder andere Vorsprünge, die fest mit der Schraube (3) verbunden sind, umfassen, die mit in zwei Flanschen (17) eingelassenen Schlitzen oder Löchern zusammenwirken und um eine koaxial zum Rotor (0) angeordnete Welle (18) gegenüber dem Gehäuse (1) verstellbar und festsetzbar sind.

4. Vorrichtung nach einem der Ansprüche 1 bis 3, dadurch gekennzeichnet, daß sie Mittel (61, 19, 20, 21) zur Koordinierung und Synchronisierung der Relativbewegung bei der Anstellwinkelverstellung der Blätter (14) untereinander enthält.

5. Vorrichtung nach Anspruch 4, dadurch gekennzeichnet, daß die Mittel jeweils an einem Blattfuß (2) ein mit dem Stift (6) verbundenes Kegelrad (19) umfassen, das mit Kegelrädern (20, 21) in Eingriff steht, die koaxial zur Rotorwelle (0) ausgerichtet sind und die (20, 21) ebenfalls mit den Kegelrädern (19) der anderen Blattfüße (2) in Eingriff stehen.

6. Vorrichtung nach Anspruch 5, dadurch gekennzeichnet, daß der Stift (6) rotatorisch mit der Mutter (4) verbunden (61), jedoch translatorisch frei von dieser ist.

7. Vorrichtung nach Anspruch 6, dadurch gekennzeichnet, daß die Feder (7) den Fuß (2) des Blattes (14) in Richtung der Ruhelage unter Mitwirkung des Stiftes (6) oder der daran befestigten Schraube (3) und der Mutter (4) drückt.

8. Vorrichtung nach Anspruch 6, dadurch gekennzeichnet, daß die Füße (2) der Blätter (14) von einer Feder in Richtung ihrer Ruhelage gedrückt werden, die mit einer die Kegelräder (20, 21) tragenden Welle (18) und ihren Kegelrädern (20, 21) zusammenwirkt.

9. Anwendung eines Propeller beim Fliegen, der mit einer Vorrichtung gemäß einem der Ansprüche 1 bis 8 ausgestattet ist, dadurch gekennzeichnet, daß die Propellerblätter (14) und die Verstellvorrichtung so gestaltet sind, daß automatisch eine Segelstellung sichergestellt ist, also eine Anstellung von 90°, wenn der Rotor stillsteht, sowie eine Reise-Zwischenstellung bis zu einer optimalen Anstellung, wenn die Motordrehzahl bis zu einer Reisedrehzahl ansteigt, und eine Stellung mit kleinem Anstellwinkel oder minimalen Anstellwinkel bei hoher Motordrehzahl.

10. Anwendung eines Propellers bei einem Windrad, das mit einer Vorrichtung gemäß einem der Ansprüche 1 bis 8 ausgestattet ist, dadurch gekennzeichnet, daß die Blätter (14) des Propellers und die Vorrichtung so gestaltet sind, daß automatisch eine mittlere Anstellung, die optimal für mittlere Windgeschwindigkeiten ist, bis zu einer Stellung ohne Anstellung, also einer Anstellung quasi ohne Widerstand, bei einem Wind sichergestellt ist, dessen Geschwindigkeit eine Sicherheitsgrenze erreicht oder überschreitet.

**Claims**

1. A deivice for automatically regulating the pitch of a rotor propeller in which centrifugal force acts on each blade (13) against the predetermined action of at least one elastic member (7) to set the angle of incidence of said blade (13), the latter being axially movable in a housing (13) for the blade shank (2) under the action of the centrifugal force and/or of the elastic member (7), means (3, 4) for inducing from this axial motion of rotational motion of the blade (14) about its axis, said means (3, 4) comprising a screw (3) and a meshing nut (4) which are coaxial with the blade (14) and of which one (3 or 4) is solid with the blade shank (2) and the other (4 or 3) is solid with the shaft of the rotor (0), the blade shank (2) being axially and rotationally movable in a sleeve (13) solid with a case (1) secured to the shaft of the rotor (0), the elastic member (7) being a helical spring guided by a stem (6) solid with the screw (3) and bearing at one end on a component (8) solid with the stem (6), and at the other end on a part solid with the blade shank (2), the axial motion of the blade shank (2) being limited by an abutment (11), characterized in that the abutment (11) is mobile and that a second elastic member (5) is interposed between said abutment (11) and a component (13) solid with the case (1), thereby enabling controlled and limited movement of said abutment (11), and in that the abutment (11) and the second elastic member (5) are of generally annular shape and surround the blade shank (2).

2. A device according to claim 1, characterized in that it comprises means (16, 17, 22) for adjusting at rest the axial distance travelled by the blade shank (2) between its feathered position and its high pitch position.

3. A device according to claim 2, characterized in that the means for adjusting the distance travelled by the blade shank include pins (16) or other sliapes that are solid with the screw (3) that cooperate with openings or holes provided in two flanged members (17) and able to be rotatably moved and immobilized (22) about a shaft (18) coaxial with the rotor (0) in relation to the case (1).

4. A device according to any one of claims 1 to 3 characterized in that it comprises means (61, 19, 20, 21) for coordinating and synchronizing the relative movement for varying the pitch of the blades (2), between themselves.

5. A device according to claim 4, characterized in that said means include, for each blade shank (14), a conical pinion (19) solid with the stem (6) and meshing with conical pinions (20, 21) coaxial with the shaft of the rotor (0), said latter pinions (20, 21) also meshing with the conical pinions (13) of the other blade shanks (2).

6. A device according to claim 5, characterized in that the stem (6) is rotationally solid (61) with the nut (4) and is free for translationary movement in relation to the latter.

7. A device according to claim 6, characterized in that the spring (7) urges the blade shank (2) to return to its rest position while cooperating with the stem (6) or the screw (3) that is solid therewith and the nut (4).

8. A device according to claim 6, characterized in that the blade shanks (2) are urged to return to their rest position by a spring cooperating with the pinion-bearing shaft (18) and the pinions (20, 21) borne by the shaft (18).

9. The use in aviation of a rotor having a propeller and provided with a device according to any one of claims 1 to 8, characterized in that the propeller blades (14) and the regulating device are so designed as to ensure automatically a feathering position, i. e. of quasi-infinite pitch, when the engine is stopped, an intermediate phase of decreasing pitch down to an optimal pitch when the speed of the engine increases to cruising speed and a fine or minimal pitch phase when the speed of the engine is high.

10. The use in a wind engine of a rotor having a propeller and provided with a device according to any one of claims 1 to 8, characterized in that the propeller blades (14) and the device are so designed as to ensure automatically an increasing and optimal pitch phase for increasing wind speeds up to a feathering position, i. e. of quasi-infinite pitch, for a wind speed reaching or exceeding a safety threshold.

Fig. 1

Fig. 2